# EUROPEAN PATENT SPECIFICATION

(11) **EP 0 952 360 B1**
(45) Date of publication and mention of the grant of the patent: **25.06.2003**
(21) Application number: 99303150.9
(22) Date of filing: 23.04.1999
(51) Int. Cl.: F16B 41/00

(54) **Panel fastener**
Befestigungsvorrichtung für Platten
Elément de fixation à insérer dans des panneaux

(30) Priority: 23.04.1998 US 82760 P
(43) Date of publication of application: 27.10.1999
(73) Proprietor: Pem Management, Inc., Wilmington, Delaware 19801 (US)
(72) Inventor: Ross, Harold D., Chalfont, Pennsylvania (US)
(74) Representative: Evans, Claire

(56) References cited:
- GB-A- 1 520 428
- US-A- 4 621 961
- US-A- 5 642 972

## Description

The present invention relates to panel fasteners of the type having a retractable screw that is spring-biased in a retracted position. The screw is captive and extendable within a base member (a ferrule) which is attachable to a panel.

Retractable panel fasteners are well-known in the art and include a headed screw which is biased in a retracted position by resilient means acting between the underside of the head of the screw and the top of a base element which is affixed to the panel. The resilient means is usually a metal coil spring. When it is desired to extend the threaded end of the screw so that, for example, one panel may be threadably affixed to another, the screw is depressed downward and turned to effect the threaded engagement.

US 5,642,972 discloses such a panel fastener with the resilient means being a spring.

The present invention provides a panel fastener according to Claim 1.

The present invention provides a marked improvement over the prior art by replacing the coil spring element with a mould-around cap having resilient fingers which are spread apart as the screw is depressed. The fingers of the cap ride along axially divergent sides of the base member to provide the biasing force in the retracted direction. The cap may further include other structures, such as knurling, to increase the finger grip on the screw. The thermoplastic element further provides the possibility of color-coding different fasteners by changing the color of the plastic material.

The panel fastener may include panel attachment means at the bottom of said ferrule.

The panel fastener may include screw captivation means adjacent the top of the ferrule.

Other objects and advantages and novel features of the invention will become apparent from the following detailed description of an example of apparatus embodying the invention when considered in conjunction with the accompanying drawings.
Figure 1 is a top left front isometric view of the present invention.
Figure 2 is a side sectional view of the present invention with the panel fastener screw in its retracted position.
Figure 3 is a side sectional view showing the panel fastener screw in its depressed, engaged position.

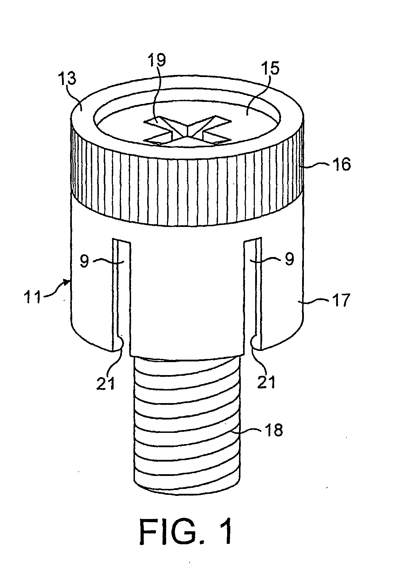

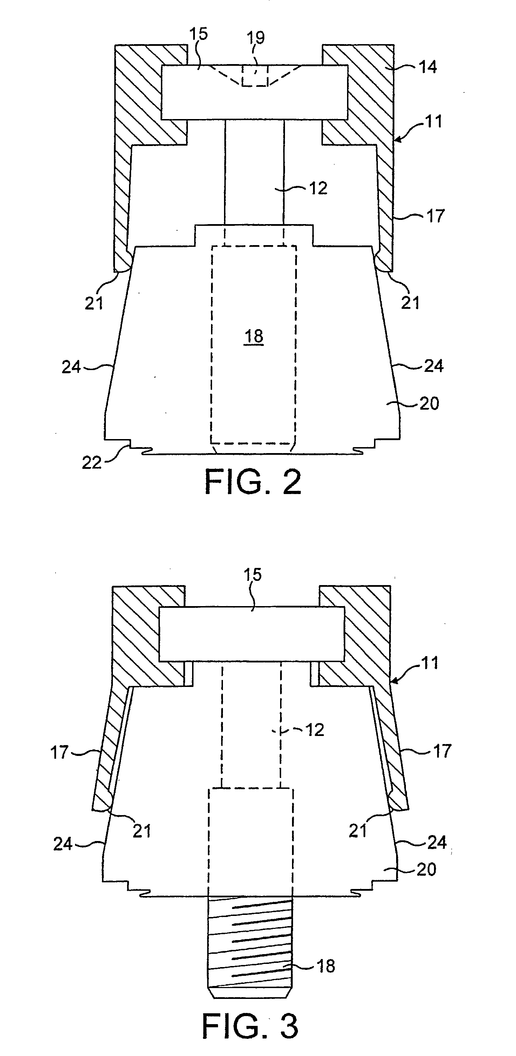

Referring now to Figure 1, the mold-around cap 11 feature of the present invention is shown affixed to screw member 13. As will be more fully shown with regard to Figures 2 and 3, the cap is preferably a thermoplastic material molded around the top, side, and bottom surfaces of the circumference area of screw head 15. The thermoplastic cap may include knurling 16 to increase finger grip. The cap includes a skirt having individual fingers 17 separated by slots 9. The base of each finger includes an inward-facing circumferential rib 21 which provides the operative point of contact between the cap and a frustoconical base member 20 of the fastener.

Referring now to Figure 2, greater detail of the thermoplastic cap 11 is shown. The top portion of the cap includes an annular ring portion 14 which is molded around screw head 15 so that it fully encompasses the top, side, and bottom edges around the circumference of the screw head. A circular opening in the top of the cap permits the top face of the screw head and its tool engagement recess 19, such as a Phillips head recess, to be accessible by a tool from above. The screw further includes a shank 12 which is connected to an enlarged threaded portion 18 at the bottom which is captive with ferrule 20 of the fastener. The ferrule includes a cylindrical bore through which the screw can slide vertically. The ferrule 20 is substantially frustoconical and includes divergent side surfaces 24 which, as will be described with regard to Figure 3, provide the wedging action against the finger 17 of the cap 11 as it moves downward. The operative contact points on the cap against the base member is an arcuate projection 21 located along the bottom edge of each of the cap fingers 17. Because a resilient thermoplastic material is used to form the cap, the fingers function as individual leaf springs. As the screw and cap progress downward, fingers 17 are resiliently spread apart by the wedging interaction with the ferrule 20. Because the fingers 17 are resiliently inwardly biased toward their at-rest position shown in this figure, the wedging action against the ferrule 20 provides a resulting biasing force against screw head 15 in the upward direction.

Referring now to Figure 3, the panel fastener of the present invention is shown in its depressed or extended position, whereby the threaded end of the screw 18 projects from the bottom of ferrule 20 so that it is exposed to threadably engage another member. In this position, the fingers along the bottom skirt of the cap 11 are shown spread apart, having been urged axially outward by contact between lobes 21 along the bottom edge of each finger and the downward divergently tapered surface 24 of the ferrule 20.

From the foregoing drawings and description, it will be readily understood by those of ordinary skill in fastener arts that the present invention provides a resiliently-biased panel fastener which maintains the screw in a retracted position at rest without using the traditional metal coil spring in the top of the base member and the head of the screw. A unique aspect of the present invention is the capability of designing the convergent sides of the ferrule and the operational contact parts of the thermoplastic cap so that the frictional forces between the cap and the ferrule are greater than the biasing force. Thus, in an alternative embodiment, a retractable panel fastener may be designed such that the screw will remain where it is last positioned, both axially and radially. In yet another embodiment, these operational features may also include structures along a divergent outer surface of the ferrule which interact with the fingers of the cap. These structures may include lateral or longitudinal grooves to provide a locking function for the screw.

It should be understood that the above description discloses specific embodiments of the present invention and are for purposes of illustration only. There may be other modifications and changes obvious to those of ordinary skill in the art that fall within the scope of the present invention which should be limited only by the following claims and their equivalents.

## Claims

1. A panel fastener, comprising:
a ferrule (20) including a bore for receiving a rotatable and axially slidable screw within said bore,
said screw (13) having a head (15) at the top, a shank (12), and a threaded portion (18) at the bottom,
**characterized in that** the ferrule (20) has a frusto-conical outside surface (24) divergent toward the bottom thereof, and said panel fastener further comprises
a thermoplastic cap (11) molded around said head (15) of said screw (13), said cap including a slotted skirt with resilient fingers (17), such that when said screw (13) is moved downward through said bore of said ferrule (20), said fingers (17) of said cap (11) wedge against an outside surface of said ferrule (20) spreading said fingers (17) radially outward, thus providing a force urging said screw (13) in an upward direction.

2. The panel fastener of claim 1 further including panel attachment means (22) at the bottom of said ferrule (20).

3. The panel fastener of claim 1 or claim 2, wherein said ferrule (20) further includes a circumferential groove along the outside surface adjacent to the bottom end of said ferrule.

4. The panel fastener of any preceding claim wherein the head (15) of said screw includes a cap having a circular aperture said head having means (19) to facilitate rotation thereof by a tool.

5. The panel fastener of any preceding claim, further including screw captivation means adjacent the top of the ferrule (20).

## Patentansprüche

1. Befestigungsvorrichtung für Platten mit
einer Hülse (20) mit einer Bohrung zur Aufnahme einer drehbaren und in der Bohrung axial gleitenden Schraube,
wobei die Schraube (13) einen Kopf (15) an der Oberseite, einen Schaft (12) und einen mit einem Gewinde versehenen Abschnitt (18) an der Unterseite aufweist,
**dadurch gekennzeichnet, dass** die Hülse (20) eine kegelstumpfförmige Außenfläche (24) hat, die sich zu ihrer Unterseite hin aufweitet, wobei die Befestigungsvorrichtung für Platten weiterhin Folgendes umfasst:
eine um den Kopf (15) der Schraube (13) herum geformte thermoplastische Kappe (11), die eine geschlitzte Schürze mit elastischen Fingern (17) umfasst, sodass die Finger (17) der Kappe (11) sich gegen eine Außenfläche der Hülse (20) verkeilen, wodurch die Finger (17) radial nach außen gespreizt werden, wenn die Schraube (13) nach unten durch die Bohrung der Hülse (20) bewegt wird, wodurch eine Kraft bereitgestellt wird, die die Schraube (13) nach oben drängt.

2. Befestigungsvorrichtung für Platten nach Anspruch 1, weiterhin mit einem Plattenanbringmittel (22) an der Unterseite der Hülse (20).

3. Befestigungsvorrichtung für Platten nach Anspruch 1 oder 2, bei der die Hülse (20) weiterhin eine Umfangsnut entlang der Außenfläche in der Nähe des unteren Endes der Hülse umfasst.

4. Befestigungsvorrichtung für Platten nach einem der vorhergehenden Ansprüche, bei der der Kopf (15) der Schraube eine Kappe mit einer kreisförmigen Öffnung umfasst, wobei der Kopf ein Mittel (19) umfasst, das dessen Drehen durch ein Werkzeug erleichtert.

5. Befestigungsvorrichtung für Platten nach einem der vorhergehenden Ansprüche, weiterhin mit Schraubenfestlegemitteln in der Nähe der Oberseite der Hülse (20).

## Revendications

1. Attache de panneau, comprenant :
une férule (20) comportant un alésage pour recevoir une vis pouvant tourner et coulisser dans le sens axial dans ledit alésage,
ladite vis (13) ayant une tête (15) à sa partie supérieure, une tige (12) et une partie filetée (18) à sa partie inférieure,
**caractérisée en ce que** la férule (20) a une surface extérieure en tronc de cône (24) divergente vers sa partie inférieure, et **en ce que** ladite attache de panneau comprend en outre :
un capuchon thermoplastique (11) moulé autour de ladite tête (15) de ladite vis (13), ledit capuchon comprenant une jupe fendue ayant des doigts élastiques (17), de telle façon que, quand ladite vis (13) est déplacée vers le bas dans ledit alésage de ladite férule (20), lesdits doigts (17) dudit capuchon (11) se coincent contre une surface extérieure de ladite férule (20) écartant lesdits doigts (17) radialement vers l'extérieur et produisant de la sorte une force qui presse ladite vis (13) dans une direction orientée vers le haut.

2. Attache de panneau selon la revendication 1, comprenant en outre un moyen de fixation de panneau (22) au bas de ladite férule (20).

3. Attache de panneau selon la revendication 1 ou la revendication 2, dans laquelle ladite férule (20) comporte en outre une gorge circonférentielle aménagée le long de la surface extérieure, adjacente à l'extrémité inférieure de ladite férule.

4. Attache de panneau selon l'une quelconque des revendications précédentes, dans laquelle la tête (15) de ladite vis comprend un capuchon ayant une ouverture circulaire, ladite tête comprenant un moyen (19) pour faciliter la rotation de celle-ci par un outil.

5. Attache de panneau selon l'une quelconque des revendications précédentes, comprenant en outre un moyen de capture de la vis, adjacent à la partie supérieure de la férule (20).
